# EUROPEAN PATENT SPECIFICATION

(11) **EP 4 154 987 B1**
(45) Date of publication and mention of the grant of the patent: **20.08.2025**
(21) Application number: 21199033.8
(22) Date of filing: 27.09.2021
(51) Int. Cl.: B05B 13/00, B05B 12/12, B05D 5/00, F03D 1/06, B24B 29/00, B08B 5/04, B05D 3/12, B24B 27/00, B24B 49/12, B24B 19/14, B08B 1/30, B05B 13/04, B05B 7/04, B05D 1/02, B05D 1/26, B08B 1/34

(54) **SURFACE TREATMENT VEHICLE AND METHOD FOR MANUFACTURING A WIND TURBINE BLADE**
OBERFLÄCHENBEHANDLUNGSFAHRZEUG UND VERFAHREN ZUR HERSTELLUNG EINER WINDTURBINENSCHAUFEL
VÉHICULE DE TRAITEMENT DE SURFACE ET PROCÉDÉ DE FABRICATION D'UNE PALE D'ÉOLIENNE

(43) Date of publication of application: 29.03.2023
(73) Proprietor: Siemens Gamesa Renewable Energy A/S, 7330 Brande (DK)
(72) Inventor: Dircks, Stefan, 24976 Handewitt (DE); Rokohl, Simon Groenlund, 9000 Aalborg (DK)
(74) Representative: SGRE-Association

(56) References cited:
- EP-A1- 1 103 310
- CN-B- 110 192 026
- JP-A- S60 147 269
- US-A1- 2013 122 186
- US-A1- 2020 238 324

## Description

The present invention relates to a surface treatment vehicle for manufacturing a wind turbine blade and a method for manufacturing a wind turbine blade.

Producing more power using a wind turbine under given wind conditions can be achieved by increasing the size of the blades. However, the manufacture of wind turbine blades is becoming increasingly difficult for increasing blade sizes.

Manufacturing a wind turbine blade usually includes producing a blade shell (e.g., from fiber-reinforced laminate) and processing the outer surface of the blade shell. For example, after casting of the blade shell small defects, e.g., holes, may remain on the outer surface of the blade shell. Such defects are commonly repaired to provide a smooth and highquality outer surface of the blade. Repairing defects on the outer surface of a blade shell is especially crucial for large offshore wind turbines which may be exposed to extreme loads and weather conditions during operation. If surface defects of blades are not repaired, they may lead to major damage of the blade coating system in operation. In particular at high speeds, raindrops, hail or bird strikes can cause damage and erosion of the outer surface of the blade. Erosion of the blade surface may reduce the aerodynamic efficiency of the blade and thus the power output of the wind turbine significantly.

However, treating the surface of a large blade requires performing work over the entire cross-section of the blade and along the entire length of the blade. Such work is usually performed with the blade being in a horizontal orientation. Current blade lengths can exceed 100 meter and current blade diameters at the root end of a blade can be as large as 4.5 meters. It is expected that these numbers keep increasing in the next years. Thus, treating the surface of a large blade is a costly process. Further, it is necessary to perform work with high accuracy in large heights and over a very large length. Furthermore, workers may be exposed during the work to hazardous substances. They may also be required to wear protection suits and masks over a long period of time or work in non-ergonomic positions.

CN 110 192 026 B discloses a method of repairing erosion on a wind turbine blade by placing a scanning device on an erosion zone. The device scans the erosion zone to gather an image and/or digital data. A printing system deposits a material according to the image and/or digital data. The repair system may include a frame such that scanning and/or depositing are with respect to the frame. An unmanned aerial vehicle may be operated to position at least one of the scanning device and the printing system on the wind turbine blade.

US2013122186A1 discloses an apparatus for coating horizontal surface.

It is one object of the present invention to provide an improved tool for manufacturing a wind turbine blade and an improved method for manufacturing the wind turbine blade. Accordingly, a surface treatment vehicle for manufacturing a wind turbine blade is proposed. The vehicle comprises:
a transportation unit for locomotion of the vehicle on a floor of a manufacturing hall,
a filling unit for applying a filler material on a surface of the blade, blade, and
a smoothing unit for filling out surface defects of the blade with the applied filler material,
wherein the filling unit comprises:
   a dispensing head for dispensing the filler material, the dispensing head being moveably attached to the transportation unit, and
   a tank for storing the filler material, the tank being attached to the transportation unit and fluidly connected to the dispensing head, and
wherein the smoothing unit comprises a smoothing tool head moveably attached to the transportation unit.

Having the surface treatment vehicle with the filling unit allows an easier, faster, safer and more efficient manufacturing of a wind turbine blade. In particular, a filler material can be better applied on the outer surface of the blade. Hence, the outer surface of the blade can be easier and faster repaired during manufacture of the blade. Further, by having the vehicle with the filling unit the manufacturing step of applying filling material on the outer surface of the blade can be automatized. In particular, it can be performed in a semi-automatic or a fully automatic manner for the entire blade.

The surface treatment vehicle is, in particular, configured for treating an outer surface of a blade in a horizontal orientation of the blade, for example in a manufacturing hall.

The filling unit is, for example, configured to apply the filling material on the outer surface of a blade shell after casting the blade shell and before painting and/or coating the blade shell.

The surface treatment vehicle includes, for example, wheels rotatably attached to the transportation unit for locomotion of the surface treatment vehicle with respect to the blade. Thus, the vehicle can drive on its wheels along the blade, for example along the blade in the horizontal orientation. In particular, the vehicle is performing a rolling movement on the wheels. Having the surface treatment vehicle on wheels allows a high flexibility in maneuvering the vehicle alongside the blade. This is in particular advantageous as the blade is usually curved and tapered from a root portion to a tip portion thereof.

Further, the wheels are, for example, steerable wheels. Each of the wheels may, for example, be rotatably attached to the transportation unit such that the respective wheel is rotatable around an axis arranged parallel to a height direction of the vehicle. The wheels are, for example, rotatably attached to the transportation unit such that the respective wheel is rotatable by an angle of at least 180° around the axis arranged parallel to the height direction of the vehicle. Thus, the vehicle can move in all directions on a horizontal plane such as a floor of a manufacturing hall. Hence, it can be positioned even more flexible with respect to the blade.

The transportation unit may, for example, be a forklift. However, the transportation unit may also have a different configuration than a forklift.

The wind turbine blade is provided to become part of a rotor of a wind turbine. The wind turbine is an apparatus to convert the wind's kinetic energy into electrical energy. The wind turbine comprises, for example, the rotor having one or more of the blades connected each to a hub, a nacelle including a generator, and a tower holding, at its top end, the nacelle. The tower of the wind turbine may be connected to a foundation of the wind turbine such as a monopile in the seabed.

In the installed state of the wind turbine, the blade, e.g., a root portion of the blade, is, for example fixedly or rotatably connected to the hub. The wind turbine blade is, for example, directly bolted to the hub, or is connected via a pitch bearing to the hub. The pitch bearing is configured to adjust the angle of attack of the blade according to the wind speed to control the rotational speed of the blade.

Apart from the essentially cylindrical root portion configured for connection with the hub, the outer surface of the wind turbine blade has an aerodynamically shaped cross-section (airfoil). The aerodynamically shaped cross-section of the wind turbine blade comprises, for example, a pressure side (upwind side) and a suction side (downwind side). The pressure side and the suction side are connected with each other at a leading edge and a trailing edge.

A blade shell of the blade is, for example, manufactured from fiber-reinforced resin. The blade shell is, for example, manufactured by vacuum-infusion of resin into a dry fiber lay-up and curing the resin. However, the blade shell may also be manufactured by a different method. The blade shell has, in particular, an outer surface and an inner surface, wherein the outer surface defines the aerodynamic profile of the blade, and the inner surface defines an inner cavity of the blade.

The "surface of the blade" on which the filler material is applied by the filling unit refers, in particular, to a surface of the blade shell. Further, it refers to any state of the blade or portions thereof during the blade manufacturing process. This may include a state in which the blade shell is already closed, i.e. forming, in a cross-section view, a closed inner cavity and/or having a continuous outer surface. However, it may also include a state in which the blade shell is not yet closed and the surface treatment vehicle is moving with respect to, for example, a half shell or another section of the blade and a surface of the half shell or the other section of the blade is treated by the filling unit.

The dispensing head includes, for example, a nozzle and/or a spray nozzle.

The surface treatment vehicle is configured to move in a horizontal plane defined by a floor of a manufacturing hall.

The dispensing head is, for example, attached to the transportation unit such that it is movable in a direction perpendicular to said horizontal plane. In particular, the dispensing head is, for example, attached to the transportation unit such that it is movable up and down along a vertical direction. The vertical direction is, for example, a vertical direction of the vehicle and/or of a manufacturing hall.

The tank is, for example, fixed with respect to the transportation unit. The tank is, for example, fluidly connected to the dispensing head by means of one or more hoses.

According to an embodiment, the filling unit is configured for mixing a two-component filler material and applying the mixed two-component filler material on the surface of the blade.

The two-component filler material is, in particular, made of at least two components undergoing a chemical reaction when mixed with each other. The chemical reaction causes, for example, a hardening and/or curing process of the mixture. Each of the two components is, for example, in a liquid and/or viscous state before brought in contact with the other one of the two components. When brought in contact with each other, the two components are reacting with each other and start, for example, to cure.

The two-component filler material is, for example, suitable to fill out defects (e.g., holes) in a resin matrix such as a fiber-reinforced resin laminate. The two-component filler material is, for example, a two-component filler material suitable for marine environments. The two-component filler material is, for example, a two-component epoxy filler, a two-component polyester filler and/or a two-component polyurethane filler.

The filling unit comprises, for example, a mixing unit for mixing the at least two components of the two-component filler material with each.

Having the filling unit configured for mixing and applying a two-component filler material integrated in the vehicle allows mixing the two components only shortly before applying the mixed two-component filler material on the surface of the blade. Hence, even in the case of a two-component filler material with a short pot life, the mixed two-component filler material still has the right properties for being successfully applied on the blade surface and potentially further processed (e.g., smoothed). The pot life describes the period of time over which a reactive two-part material has the right properties for being successfully processed.

In other embodiments, the filler material may also be a onecomponent filler material. The filler material may, for example, be a spray filler.

According to a further embodiment, the dispensing head comprises a mixing unit for mixing the two-component filler material, and the tank comprises at least two separate chambers for the at least two components of the two-component filler material, each chamber being fluidly connected with the mixing unit of the dispensing head.

Having the two separate chambers of the tank, the two components of the two-component filler material can be stored separately in the vehicle. In particular, the two components can be stored such that their pot life does not yet start.

Further, having the mixer unit integrated in the dispensing head allows mixing the at least two components immediately prior to applying the mixed two-component filler material on the surface of the blade. Thus, the pot life of the two-component filler material does only start immediately prior to application. Hence, for example a significant change of the viscosity of the mixed two-component filler material does not occur prior to application.

Furthermore, hardening of the two-component filler material in the tank and or a supply line between the tank and the dispensing head can be avoided. Thus, cleaning and or replacing of the tank and/or the supply line(s) due to residuals of hardened filler material is not necessary.

According to a further embodiment, the surface treatment vehicle comprises a sensor unit for obtaining sensor data of the surface of the blade.

Having the sensor unit allows scanning the surface of the blade and obtaining information about a current state of the outer surface of the blade. For example, with the sensor unit defects (e.g., holes) can be detected on the outer surface of the blade. For example, with the sensor unit the blade surface can be inspected prior to applying the filler material by means of the filler unit.

The sensor unit may also be configured for determining the position of the vehicle with respect to the blade, the position of the dispensing head (or another tool head) with respect to the transportation unit and/or monitor another surface treatment process of the blade.

The sensor unit comprises, for example, one or more tool heads moveably attached to the transportation unit of the vehicle. The sensor unit, e.g., its tool head(s), comprise(s), for example, one or more sensors.

The one or more sensors may include laser trackers, odometry systems including motion sensors, radar systems (radio detection and ranging), lidar systems (light detection and ranging), optical sensors such as infrared or visual light cameras (e.g., for scanning markers on a floor and/or ceiling of a manufacturing hall and/or on a blade), structured light sensors, ultrasonic sensors, encoders, laser pointer, proximity sensors, temperature sensors and/or pressure sensors.

The surface treatment vehicle comprises a smoothing unit for filling out surface defects of the blade with the applied filler material, wherein the smoothing unit comprises a smoothing tool head moveably attached to the transportation unit.

By having the smoothing unit, the applied filler material can be scraped to a predefined thickness. Further, the applied filler material can be pressed into holes on the surface of the blade to fill out the holes.

The smoothing unit comprises, for example, means for applying a pressure on the surface of the blade.

The smoothing tool head is, for example, a replaceable tool head. The smoothing tool head is, for example, detachably fixed to the transportation unit.

In embodiments, the smoothing tool head comprises a scraper, for example, a single scraper. The scraper is, for example, made of plastic or thin flexible metal. The scraper is, for example, a replaceable tool. The scraper of the smoothing tool head is, for example, detachably fixed to the smoothing tool head.

According to a further embodiment, the smoothing tool head comprises at least one rotating drum, and the at least one rotating drum comprises wiping elements at its outer surface for wiping over the surface of the blade.

The at least one rotating drum has, for example, a cylindrical shape with a circular base area. The at least one rotating drum is, for example, configured to rotate around its cylinder axis. The cylinder axis is, in particular, a rotational symmetry axis of the rotating drum.

The rotational axis of the at least one rotating drum is, for example, configured for being arranged parallel to an outer surface of the blade and/or parallel to a length direction of the blade during surface treatment. The wiping elements are, for example, made of a flexible material. The wiping elements are, for example, made of a rubberlike material.

Further, the smoothing unit comprises, for example, a drive unit for driving a rotation of the rotating drum around its rotation axis. The drive unit is, for example, part of the transportation unit.

According to a further embodiment, the smoothing tool head comprises at least one rotating drum for rolling over the surface of the blade, and the at least one rotating drum comprises a flexible material on its outer surface.

In this embodiment, the at least one rotating drum is, in particular, performing a rolling movement on the surface of the blade. The at least one rotating drum is, for example, configured to be driven to rotation by the rolling movement on the surface of the blade.

The smoothing unit comprises, for example, means for applying pressure through the at least one rotating drum on the surface of the blade.

The at least one rotating drum has, for example, a cylindrical shape with a circular base area. The at least one rotating drum is, for example, configured to rotate around its cylinder axis. The cylinder axis is, in particular, a rotational symmetry axis of the rotating drum.

The rotational axis of the at least one rotating drum is, for example, configured for being arranged parallel to an outer surface of the blade and/or parallel to a length direction of the blade during surface treatment.

The outer surface of the at least one rotating drum comprises, for example, flexible fibers and/or flexible foam. The outer surface of the at least one rotating drum is, for example, configured such that it can be elastically compressed to adapt to the outer surface of the blade.

According to a further embodiment, the surface treatment vehicle comprises a grinding unit for grinding the surface of the blade and/or a cleaning unit for cleaning the surface of the blade.

By having the grinding unit, the outer surface of the blade can be roughened and/or activated. For example, after casting the blade (i.e. the blade shell), the outer surface of the blade can be very smooth. In order to apply paint and/or a coating on the blade surface, the surface needs to be pre-processed. By having the grinding unit, the outer surface of the blade can be pre-processed for later application of paint and/or coatings.

The cleaning unit comprises, for example, means for vacuum cleaning of the blade surface. The cleaning unit comprises, for example, suction means.

According to a further embodiment, the surface treatment vehicle comprises a control unit for controlling:
the locomotion of the surface treatment vehicle,
the filling unit, the sensor unit, the smoothing unit, the grinding unit and/or the cleaning unit, and/or
the movement, with respect to the transportation unit, of the dispensing head, the smoothing tool head, a tool head of the grinding unit and/or a tool head of the cleaning unit.

The control unit is, in particular, configured for global positioning of the vehicle. The control unit is, for example, configured for controlling the movement of the vehicle with respect to the blade and/or the manufacturing environment (e.g., a manufacturing hall).

Further, the control unit is, in particular, configured for local positioning of the dispensing head, the smoothing tool head, the tool head of the grinding unit and/or the tool head of the cleaning unit with respect to the blade.

Further, the control unit may, for example, also be configured for local positioning of a tool center point of the dispensing head, the smoothing tool head, the tool head of the grinding unit and/or the tool head of the cleaning unit.

Having the sensor system and transferring sensor data from the sensor system to the control unit, the control unit may receive a feedback, for example on the current position of the vehicle (e.g., with respect to the blade) and/or the current position of the respective tool head (e.g., the dispensing head) (e.g., with respect to the transportation unit and/or the blade).

Further, having the sensor system, the control unit may receive a feedback on the manufacturing process, e.g., the surface treatment process.

The control unit comprises, for example, a data processing unit for processing the sensor data and other kind of data.

Further, the surface treatment vehicle may, for example, comprise a display unit for user input and/or visualization of results of the data processing. The display unit may be attached to the vehicle, e.g., the transportation unit, or may be located remote from the vehicle. The display unit is configured to receive, wireless or wired, input from the control unit. The display unit may include a HMI touch panel, a tablet, a flat screen, a laptop, a smartphone.

The respective units described herein, e.g., the control unit and the data processing unit, may be implemented in hardware and/or in software. If said unit is implemented in hardware, it may be embodied as a device, e.g., as a computer or as a processor or as a part of a system such as a computer system. If said unit is implemented in software it may be embodied as a computer program product, as a function, as a routine, as a program code or as an executable object. Further, if said unit is implemented in software it may be stored, for example, in a cloud and retrieved via the internet.

According to a further embodiment, the control unit is configured for performing said control in an automatic and/or fully automatic manner.

A control in a fully automatic manner is, in particular a control without human interaction.

Thus, surface treatment of the blade surface can be performed in a more efficient way. For example, several different surface treatment processes (involving for example different surface treatment units of the vehicle) can be performed without human interaction.

According to a further embodiment, the control unit is configured for controlling the locomotion of the surface treatment vehicle and/or the movement of the dispensing head, the smoothing tool head, the tool head of the grinding unit and/or the tool head of the cleaning unit based on a surface treatment velocity of the filling unit, the sensor unit, the smoothing unit, the grinding unit and/or the cleaning unit.

By performing said control based on a surface treatment **ve**locity of the filling unit, the sensor unit, the smoothing unit, the grinding unit and/or the cleaning unit, the movement of the respective tool head can be adjusted to the surface treatment velocity.

The surface treatment velocity comprises, for example, a filler material application rate of the filling unit, a scanning velocity of the sensor unit, a smoothing velocity of the smoothing unit, a grinding velocity of the grinding unit and/or a cleaning velocity of the cleaning unit.

The control unit is, for example, configured for receiving feedback on the surface treatment process by means of the sensor unit. Further, the control unit is, for example, configured to determine a surface treatment velocity based on the received feedback.

According to a further embodiment, the control unit is configured for obtaining the sensor data from the sensor unit, identifying surface defects on the surface of the blade based on the sensor data and controlling the filling unit such that the filling unit is applying the filler material at the identified surface defects.

Thus, identifying and repairing surface defects can be performed by one surface treatment vehicle and in an automized (e.g., fully automized) manner.

According to a further aspect, a method for manufacturing a wind turbine blade by means of a surface treatment vehicle is proposed. The vehicle comprises a transportation unit for locomotion of the vehicle on a floor of a manufacturing hall, a filling unit for applying a filler material on a surface of the blade, and a smoothing unit with a smoothing tool head for filling out surface defects of the blade with the applied filler material.

Further, the method comprises the steps of:
a) moving the vehicle with respect to the blade by moving a transportation unit of the vehicle,
b) moving a dispensing head of the filling unit with respect to the transportation unit of the vehicle,
c) supplying the filler material from a tank attached to the transportation unit to the dispensing head,
d) applying the filler material on the surface of the blade,
e) moving the smoothing tool head with respect to the transportation unit, and
f) filling out surface defects of the blade with the applied filler material by means of the smoothing tool head.

Some or all of steps a) to d) may be carried out simultaneously.

According to an embodiment of the further aspect, the method comprises the steps of:
identifying surface defects on the surface of the blade by means of a sensor unit of the vehicle,
applying the filler material at the identified surface defects on the blade by means of the filling unit of the vehicle.

According to a further embodiment of the further aspect, the method comprises the steps of:
grinding the surface of the blade by means of a grinding unit of the vehicle, and/or
cleaning the surface of the blade by means of a cleaning unit of the vehicle.

According to a further aspect, a computer program product is proposed. The computer program product comprises a program code for executing the above-described method when run on at least one computer.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

The embodiments and features described with reference to the surface treatment vehicle of the present invention apply mutatis mutandis to the method of the present invention and vice versa.

Further possible implementations or alternative solutions of the invention also encompass combinations - that are not explicitly mentioned herein - of features described above or below with regard to the embodiments as long as the implementations or alternative solutions resulting from these combinations fall under the scope of the appended claims.

The person skilled in the art may also add individual or isolated aspects and features to the form of the invention, as long as the combination of features resulting from this addition falls under the scope of the appended claims.

Further embodiments, features and advantages of the present invention will become apparent from the subsequent description and dependent claims, taken in conjunction with the accompanying drawings, in which:
Fig. 1 shows a wind turbine according to an embodiment;
Fig. 2 shows a surface treatment vehicle for manufacturing a wind turbine blade of the wind turbine of Fig. 1 according to an embodiment;
Fig. 3 shows a smoothing tool head of the vehicle of Fig. 2 according to a further embodiment;
Fig. 4 shows a grinding tool head of the vehicle of Fig. 2 according to an embodiment;
Fig. 5 shows a cleaning tool head of the vehicle of Fig. 2 according to an embodiment; and
Fig. 6 shows a flowchart illustrating a method for manufacturing a blade of the wind turbine of Fig. 1 according to an embodiment.

In the Figures, like reference numerals designate like or functionally equivalent elements, unless otherwise indicated.

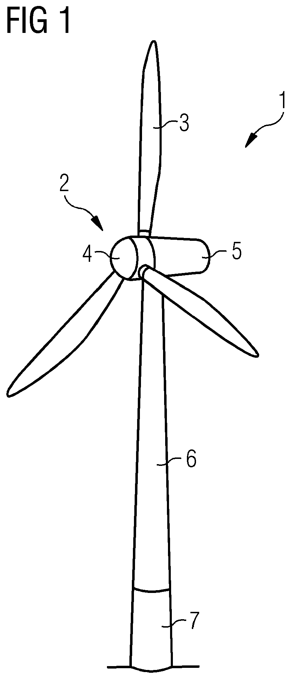

Fig. 1 shows a wind turbine 1 according to an embodiment. The wind turbine 1 comprises a rotor 2 having one or more blades 3 connected to a hub 4. The hub 4 is connected to a generator (not shown) arranged inside a nacelle 5. During operation of the wind turbine 1, the blades 3 are driven by wind to rotate and the wind's kinetic energy is converted into electrical energy by the generator in the nacelle 5. The nacelle 5 is arranged at the upper end of a tower 6 of the wind turbine 1. The tower 6 is erected on a foundation 7 such as a concrete foundation or a monopile driven into the ground or seabed.

In the following a surface treatment vehicle 8 for manufacturing a wind turbine blade 3 of the wind turbine 1 of Fig. 1 is described.

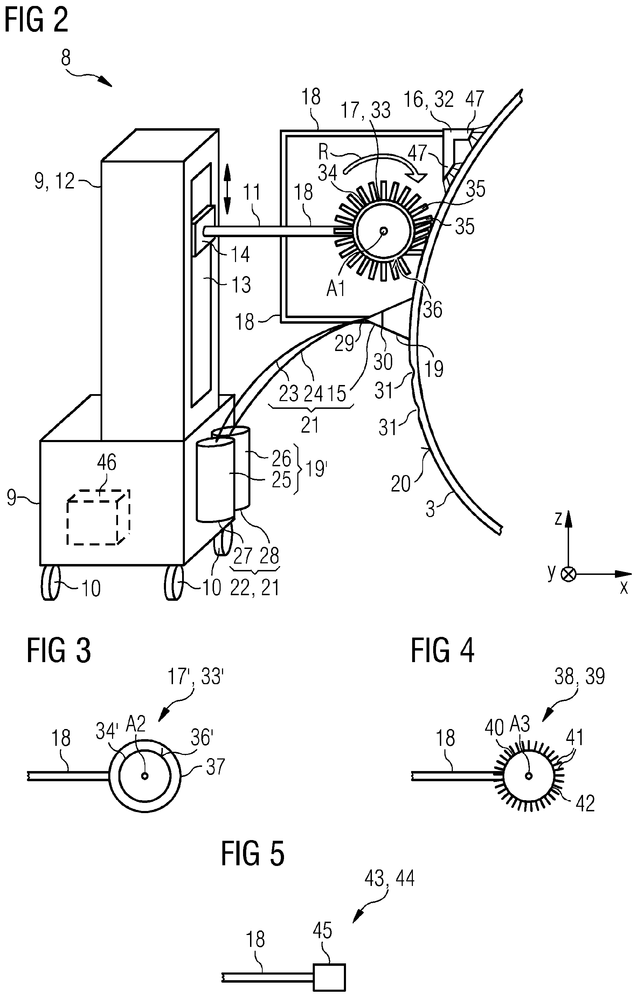

While the blade 3 shown in Fig. 1 is a ready blade installed at the wind turbine 1, the portion of the blade 3 shown in Fig. 2 is a blade under manufacture.

Fig. 2 shows the surface treatment vehicle 8 according to an embodiment. The surface treatment vehicle 8 comprises a transportation unit 9 for locomotion of the surface treatment vehicle 8. The vehicle 8 comprises, for example, wheels 10. In the shown example, there are four wheels 10 rotatably attached to the transportation unit 9 for locomotion of the vehicle 8. In particular, the vehicle 8 can move by means of its wheels 10 in a horizontal plane (XY plane in Fig. 2). The vehicle 8 is, for example, configured to move on a floor of a manufacturing hall.

The vehicle 8 further comprises a member and/or arm 11 (in the following shortly: arm) movably attached to the transportation unit 9. The arm 11 is, for example, capable to move in a vertical direction (Z direction in Fig. 2) with respect to the transportation unit 9. The transportation unit 9 - for example a columnar structure 12 of the transportation unit 9 - comprises, for example, an elongated groove 13. The groove 13 extends, for example, in the vertical direction Z of the vehicle 8. Further, the arm 11 comprises, for example, a sled 14 running in the groove 13 of the transportation unit 9. Due to the sled 14 and the groove 13, the arm 11 can be moved relative to the transportation unit 9 (e.g., relative to the columnar structure 12) in the vertical direction Z (height direction) of the vehicle 8. The surface treatment vehicle 8 may, however, also comprises other means than the sled 14 and grove 14 to move the arm 11 relative to the transportation unit 9.

As shown in Fig. 2, the surface treatment vehicle 8 further comprises several tool heads 15, 16, 17 moveably attached to the transportation unit 9. In particular, the tool heads 15, 16, 17 shown in Fig. 2 are fixed to the arm 11 via a frame 18. Further, the arm 11 is movably attached to the transportation unit 9.

The tool head 15 is in particular a dispensing head 15 for dispensing a filler material 19 on a surface 20 of the blade 3. The tool head 15 is part of a filling unit 21 of the surface treatment vehicle 8. The filling unit 21 comprises - apart from the dispensing head 15 - a tank 22 for storing the filler material 19'. The tank 22 is attached to the transportation unit 9. Further, the tank 22 is fluidly connected to the dispensing head 15 by means of one or more hoses 23, 24.

In the shown example, the filler material 19 applied on the blade surface 20 is a two-component filler material. The two-component filler material is, for example, a two-component epoxy filler, a two-component polyester filler and/or a two-component polyurethane filler.

Further, the filling unit 21 in the shown example is configured for mixing the two components 25, 26 of the two-component filler material 19'. In particular, the tank 22 of the surface treatment vehicle 8 comprises two separate chambers 27, 28 for storing the two components 25, 26, respectively. The two components 25, 26 are, in particular, in a liquid and/or viscous state when stored in the respective chamber 27, 28. Further, the chambers 27, 28 of the tank 22 are fluidly connected with the dispensing head 15 by means of the hoses 23, 24.

Furthermore, the dispensing head 15 comprises a mixing unit 29 for mixing the two components 25, 26 of the filler material 19'. Hence, the two components 25, 26 are mixed with each other immediately prior to applying the mixed two-component filler material 19 on the surface 20 of the blade 3.

The dispensing head 19 comprises, in particular, a nozzle 30 for applying the filler material 19 on the surface 20 of the blade 3. The filler material 19 is, in particular, applied at defects 31 such as holes on the surface 20 of the blade 3. In Fig. 2, there are two defects 31 shown exemplarily. However, there may more than two defects 31 on the blade surface 20.

Further, the defects 31 may have different, in particular smaller, sizes than shown in Fig. 2 for illustration purposes.

As shown in Fig. 2, the surface treatment vehicle 8 further comprises a sensor unit 32 with a sensor head 16 for obtaining sensor data of the surface 20 of the blade 3. The sensor head 16 is, in particular, moveably attached to the transportation unit 9. The sensor head 16 is, for example, moveably attached to the transportation unit 9 in a similar manner as the dispensing head 15, i.e. by the frame 18 and the arm 11 having, for example, the sled 14 running in the groove 13.

The sensor unit 32 comprises one or more sensors 47. The one or more sensors 47 may include laser trackers, odometry systems including motion sensors, radar systems (radio detection and ranging), lidar systems (light detection and ranging), optical sensors such as infrared or visual light cameras (e.g., the optical sensors scanning markers on a floor and/or ceiling of a manufacturing hall and/or on a blade), structured light sensors, ultrasonic sensors, encoders, laser pointer, proximity sensors, temperature sensors and/or pressure sensors.

As shown in Fig. 2, the surface treatment vehicle 8 further comprises a smoothing unit 33 with a smoothing tool head 17 for smoothing the surface 20 of the blade 3 and filling out the surface defects 31 of the blade 3 with the applied filler material 19. The smoothing tool head 17 is, for example, moveably attached to the transportation unit 9 in a similar manner as the dispensing head 15, i.e. by the frame 18 and the arm 11 having, for example, the sled 14 running in the groove 13.

In the example shown in Fig. 2, the smoothing tool head 17 comprises a rotating drum 34. The rotating drum 34 is rotatable around a rotation axis A1. Further, the rotating drum 34 comprises wiping elements 35 at its outer surface 36 for wiping over the surface 20 of the blade 3 during its rotation.

The smoothing unit 33 further comprises a drive unit (not shown) for driving a rotation R of the rotating drum 34. The drive unit comprises, for example, a motor.

Fig. 3 shows another embodiment of a smoothing tool head 17' of a smoothing unit 33' of the surface treatment vehicle 8. In Fig. 3, the smoothing tool head 17' comprises a rotating drum 34' for rolling over the surface 20 of the blade 3. The rotating drum 34' is rotatable around a rotation axis A2 . Further, the rotating drum 34' comprises a flexible material 37 on its outer surface 36'. The rotating drum 34' shown in Fig.3 is configured for performing a rolling movement on the surface 20 of the blade 3. The smoothing unit 33' comprises, for example, means (not shown) for applying pressure through the rotating drum 34' on the surface 20 of the blade 3.

The surface treatment vehicle 8 shown in Fig. 2 comprises three different tool heads, namely the dispensing head 15, the sensor head 16 and the smoothing tool head 17. The surface treatment vehicle 8 can, therefore, perform several surface treatment processes on the blade surface 20. The surface treatment vehicle 8 performs these surface treatment processes, for example, in an automized and/or fully automized manner.

In addition to the surface treatment units 21, 32, 33, 33' shown in Figs. 2 and 3, the surface treatment vehicle 8 may also comprise further surface treatment units.

As shown in Fig. 4, the surface treatment vehicle 8 may also comprise a grinding unit 38 for grinding the blade surface 20. The grinding unit 38 comprises a grinding tool head 39. The grinding tool head 39 comprises, for example, a rotatable drum 40 with grinding protrusions 41 protruding in a radial direction from a surface 42 of the drum 40. The drum 40 is rotatable around the axis A3. With the grinding unit 38, the outer surface 20 of the blade 3 can be roughened, e.g., for pre-processing the blade surface 20 to prepare it for later manufacturing steps such as application of paint and/or coatings.

As shown in Fig. 5, the surface treatment vehicle 8 may also comprise a cleaning unit 43 with a cleaning tool head 44 for cleaning the blade surface 20. The cleaning tool head 44 comprises, for example, suction means 45 (e.g., a suction nozzle 45) for cleaning the blade surface 20.

The surface treatment vehicle 8 further comprises a control unit 46 (Fig. 2) for controlling the surface treatment vehicle 8 and its several surface treatment units 21, 32, 33, 33', 38, 43. The control unit 46 may be realized as a hardware device as shown in Fig. 2. In other examples, the control unit 46 may also be implemented in software.

The control unit 46 is, for example, configured to control the locomotion of the surface treatment vehicle 8 moving on its wheels 10 (Fig. 2). The control unit 46 is, for example, configured to control the filling unit 21, the sensor unit 32, the smoothing unit 33, 33', the grinding unit 38 and/or the cleaning unit 43. In particular, the control unit 46 is, for example, configured to control the up-and-down movement (Z direction in Fig. 2) of the arm 11 with respect to the transportation unit 9. By controlling the up-and-down movement of the arm 11, an up-and-down movement of the respective tool head 15, 16, 17, 17', 39, 44 with respect to the blade 3 can be controlled.

Although not shown, the vehicle 8 may in addition comprise means to move the respective tool head 15, 16, 17, 17', 39, 44 in a further translation degree of freedom with respect to the transportation unit 9. The vehicle 8 may, for example, comprise means to move the respective tool head 15, 16, 17, 17', 39, 44 in three translation degrees of freedom (X, Y and Z in Fig. 2), i.e. along three translational directions being arranged perpendicular to each other. Hence, the respective tool head 15, 16, 17, 17', 39, 44 may be capable to follow an outer shape of the blade 3.

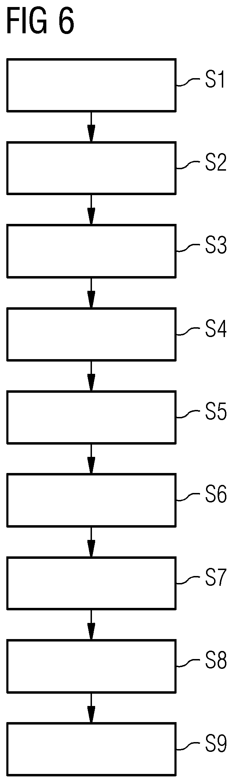

In the following a method for manufacturing the wind turbine blade 3 is described with respect to Fig. 6.

During the method steps, the blade 3 is, in particular, arranged in a horizontal position, e.g., in a manufacturing hall. Before step S1, the blade is, for example, in a state of just being casted (e.g., from fiber-reinforced resin). In this state, the blade 3 may have surface defects 31 such as holes but may have apart from such defects a very smooth surface 20 (i.e. small surface roughness).

In a first step S1 of the method, the vehicle 8 is moved on its wheels 10 with respect to the wind turbine blade 3 during manufacture. The movement of the vehicle 8 on its wheels 10 is controlled by the control unit 46. The vehicle 8 may be moved in the horizontal direction (XY direction in Fig. 2), e.g., parallel to a floor of a manufacturing hall.

In a second step S2 of the method, the arm 11 (Fig. 2) is moved relative to the transportation unit 9 of the vehicle 8. The arm 11 comprises, for example, the sensor head 16 of the sensor unit 32, the dispensing head 15 of the filling unit 21 and the smoothing tool head 17 of the smoothing unit 33, as shown in Fig. 2. The arm 11 may also comprises, for example, the grinding tool head 39 of the grinding unit 38 (Fig. 4) and/or the cleaning tool head 44 of the cleaning unit 43 (Fig. 5).

The arm 11 is, for example, moved relative to the transportation unit 9 by means of the sled 14 and the groove 13 (Fig. 2). The movement of the arm 11 relative to the transportation unit 9 is controlled by the control unit 46.

In a third step S3 of the method, the surface 20 of the blade 3 is grinded by means of the grinding unit 38 and its grinding tool head 39. Thereby, the blade surface 20 is, for example, roughened and activated for a later (after step S9) application of paint and or a coating.

In a fourth step S4 of the method, the surface 20 of the blade 3 is cleaned by means of the cleaning unit 43 and its cleaning tool head 44. The surface 20 is, for example, vacuum cleaned by suction means 45.

In a fifth step S5 of the method, the surface 20 of the blade 3 is scanned by means of the sensor unit 32 and its sensor head 16. The sensor unit 32 is, for example, obtaining sensor data of the blade surface 20 and transmits the sensor data to the control unit 46.

In a sixth step S6 of the method, surface defects 31 are identified on the surface 20 of the blade 3 by the control unit 46 based on the sensor data from the sensor unit 32.

In a seventh step S7 of the method, the filler material 19' is supplied from the tank 22 of the vehicle 8 to the dispensing head 15 of the filling unit 21.

In an eighth step S8 of the method, the filler material 19 is applied by the dispensing head 15 at the identified surface defects 31 on the surface 20 of the blade 3.

In a nineth step S9 of the method, the surface 20 of the blade 3 is smoothed by means of the smoothing unit 33, 33' and its smoothing tool head 17, 17'. In particular, the filler material 19 applied in step S8 on the blade surface 20 is smoothened such that it fills out the defects 31 and has a predefined thickness.

After step S9, the blade surface 20 may, for example, be painted and/or coated.

Steps S1 and/or S2 may be repeatedly and/or continuously carried out throughout one, some or all of steps S3 to S9. In particular, steps S1 and/or S2 may carried out simultaneously with any of steps S3 to S9.

For example, during scanning of the blade surface 20 in step S5, the vehicle 8 may be moved repeatedly and/or continuously with respect to the blade 3. Further during scanning of the blade surface 20 in step S5, the arm 11 may be moved repeatedly and/or continuously with respect to the transportation unit 9. The same applies in an analog manner to steps S3, S4 and S6 to S9.

Further, some or all of steps S3 to S9 may also be carried out simultaneously with each other.

Further, after any step, for example step S9, step S5 may be repeated for a quality check of the result of the respective surface treatment. Thus, for example the quality of the repaired defects 31 can be checked.

The data obtained in step S5 can be also used for production analysis in the long run. For example, data can be collected during the manufacture of many different blades and analyzed (for example by statistical methods) to streamline the blade production in the future. The kind of data collected may include data on the raw blade surface prior to S1, data on the mold quality (mold used to cast the blade 3 before S1), defects 31 repaired by means of grinding, defects 31 repaired by means of filler material 19, amount of material 19 used, material quality, grinding quality and sandpaper exchange etc.

For example, the filler material 19 may be applied (S8) at the same time as the surface 20 is smoothed (S9). For example, the dispensing head 15 may be arranged below or above the smoothing tool head 17, 17' with respect to the height direction of the vehicle 8 (Z direction in Fig. 2). Further, the dispensing head 15 and the smoothing tool head 17, 17' may treat the surface 20 simultaneously at two different regions of the surface, the tow different regions being arranged, for example, close or adjacent to each other. Although the present invention has been described in accordance with preferred embodiments, it is obvious for the person skilled in the art that modifications are possible in all embodiments as long as the embodiments resulting from these modifications fall under the scope of the appended claims.

## Claims

1. A surface treatment vehicle (8) for manufacturing a wind turbine blade (3), the vehicle comprising:
a transportation unit (9) for locomotion of the vehicle on a floor of a manufacturing hall,
a filling unit (21) for applying a filler material (19) on a surface (20) of the blade, and
a smoothing unit (33) for filling out surface defects (31) of the blade (3) with the applied filler material (19),
wherein the filling unit (21) comprises:
a dispensing head (15) for dispensing the filler material (19), the dispensing head (15) being moveably attached to the transportation unit (9), and
a tank (22) for storing the filler material (19'), the tank (22) being attached to the transportation unit (9) and fluidly connected to the dispensing head (15), and
wherein the smoothing unit (33) comprises a smoothing tool head (17, 17') moveably attached to the transportation unit (9).

2. The surface treatment vehicle according to claim 1, wherein the filling unit (21) is configured for mixing a two-component filler material (19') and applying the mixed two-component filler material (19) on the surface (20) of the blade (3).

3. The surface treatment vehicle according to claim 2, wherein the dispensing head (15) comprises a mixing unit (29) for mixing the two-component filler material (19'), and the tank (22) comprises at least two separate chambers (27, 28) for the at least two components (25, 26) of the two-component filler material (19'), each chamber (27, 28) being fluidly connected with the mixing unit (29) of the dispensing head (15).

4. The surface treatment vehicle according to one of claims 1 - 3, comprising a sensor unit (32) for obtaining sensor data of the surface (20) of the blade (3).

5. The surface treatment vehicle according to one of claims 1 - 4, wherein the smoothing unit (33) is configured for smoothing the surface (20) of the blade (3).

6. The surface treatment vehicle according to claim 5, wherein the smoothing tool head (17) comprises at least one rotating drum (34), and the at least one rotating drum (34) comprises wiping elements (35) at its outer surface (36) for wiping over the surface (20) of the blade (3).

7. The surface treatment vehicle according to claim 5, wherein the smoothing tool head (17') comprises at least one rotating drum (34') for rolling over the surface (20) of the blade (3), and the at least one rotating drum (34') comprises a flexible material (37) on its outer surface (36').

8. The surface treatment vehicle according to one of claims 1 - 7, comprising a grinding unit (38) for grinding the surface (20) of the blade (3) and/or a cleaning unit (43) for cleaning the surface (20) of the blade (3).

9. The surface treatment vehicle according to one of claims 1 - 8, comprising a control unit (46) for controlling:
the locomotion of the surface treatment vehicle,
the filling unit (21), a sensor unit (32), the smoothing unit (33, 33'), a grinding unit (38) and/or a cleaning unit (43), and/or
the movement, with respect to the transportation unit (9), of the dispensing head (15), the smoothing tool head (17, 17'), a tool head (39) of the grinding unit (38) and/or a tool head (44) of the cleaning unit (43).

10. The surface treatment vehicle according to claim 9, wherein the control unit (46) is configured for performing said control in an automatic and/or fully automatic manner.

11. The surface treatment vehicle according to claim 9 or 10, wherein the control unit (46) is configured for controlling the locomotion of the surface treatment vehicle and/or the movement of the dispensing head (15), the smoothing tool head (17, 17'), the tool head (39) of the grinding unit (38) and/or the tool head (44) of the cleaning unit (43) based on a surface treatment velocity of the filling unit (21), the sensor unit (32), the smoothing unit (33, 33'), the grinding unit (38) and/or the cleaning unit (43).

12. The surface treatment vehicle according to claim 4 and one of claims 9 - 11, wherein the control unit (46) is configured for obtaining the sensor data from the sensor unit (32), identifying surface defects (31) on the surface (20) of the blade (3) based on the sensor data and controlling the filling unit (21) such that the filling unit (21) is applying the filler material (19) at the identified surface defects (31).

13. A method for manufacturing a wind turbine blade (3) by means of a surface treatment vehicle (8), the vehicle comprising a transportation unit (9) for locomotion of the vehicle on a floor of a manufacturing hall, a filling unit (21) for applying a filler material (19) on a surface (20) of the blade (3), and a smoothing unit (33) with a smoothing tool head (17, 17') for filling out surface defects (31) of the blade (3) with the applied filler material (19), the method comprising the steps of:
a) moving (S1) the vehicle (8) with respect to the blade (3) by moving a transportation unit (9) of the vehicle (8),
b) moving (S2) a dispensing head (15) of the filling unit (21) with respect to the transportation unit (9) of the vehicle (8),
c) supplying (S7) the filler material (19') from a tank (22) attached to the transportation unit (9) to the dispensing head (15),
d) applying (S8) the filler material (19) on the surface (20) of the blade (3),
e) moving the smoothing tool head (17, 17') with respect to the transportation unit (9), and
f) filling out surface defects (31) of the blade (3) with the applied filler material (19) by means of the smoothing tool head (17, 17').

14. The method according to claim 13, comprising the steps of:
identifying (S5, S6) surface defects (31) on the surface (20) of the blade (3) by means of a sensor unit (32) of the vehicle (8),
applying (S8) the filler material (19) at the identified surface defects (31) on the blade (3) by means of the filling unit (21) of the vehicle (8).

15. The method according to claim 13 or 14, comprising the steps of:
grinding (S3) the surface (20) of the blade (3) by means of a grinding unit (38) of the vehicle (8), and/or
cleaning (S4) the surface (20) of the blade (3) by means of a cleaning unit (43) of the vehicle (8).

## Patentansprüche

1. Oberflächenbearbeitungsfahrzeug (8) zur Herstellung einer Windturbinenschaufel (3), wobei das Fahrzeug umfasst:
eine Transporteinheit (9) zur Fortbewegung des Fahrzeugs auf einem Boden einer Fertigungshalle,
eine Fülleinheit (21) zum Auftragen eines Füllmaterials (19) auf eine Oberfläche (20) der Schaufel, und
eine Glättungseinheit (33) zum Ausfüllen von Oberflächendefekten (31) der Schaufel (3) mit dem aufgetragenen Füllmaterial (19), wobei die Fülleinheit (21) umfasst:
einen Abgabekopf (15) zum Abgeben des Füllmaterials (19), wobei der Abgabekopf (15) beweglich an der Transporteinheit (9) befestigt ist, und
einen Tank (22) zur Speicherung des Füllmaterials (19'), wobei der Tank (22) an der Transporteinheit (9) befestigt ist und fluidtechnisch mit dem Abgabekopf (15) verbunden ist, und
wobei die Glättungseinheit (33) einen beweglich an der Transporteinheit (9) angebrachten Glättungswerkzeugkopf (17, 17') umfasst.

2. Oberflächenbearbeitungsfahrzeug nach Anspruch 1, wobei die Fülleinheit (21) dazu ausgelegt ist, ein Zweikomponenten-Füllmaterial (19') zu mischen und das gemischte Zweikomponenten-Füllmaterial (19) auf die Oberfläche (20) der Schaufel (3) aufzutragen.

3. Oberflächenbearbeitungsfahrzeug nach Anspruch 2, wobei der Abgabekopf (15) eine Mischeinheit (29) zum Mischen des Zweikomponenten-Füllmaterials (19') umfasst und der Tank (22) mindestens zwei getrennte Kammern (27, 28) für die mindestens zwei Komponenten (25, 26) des Zweikomponenten-Füllmaterials (19') umfasst, wobei jede Kammer (27, 28) mit der Mischeinheit (29) des Abgabekopfes (15) fluidtechnisch verbunden ist.

4. Oberflächenbearbeitungsfahrzeug nach einem der Ansprüche 1 bis 3, ferner umfassend eine Sensoreinheit (32) zum Erfassen von Sensordaten der Oberfläche (20) der Schaufel (3).

5. Oberflächenbearbeitungsfahrzeug nach einem der Ansprüche 1 bis 4, wobei die Glättungseinheit (33) dazu ausgelegt ist, die Oberfläche (20) der Schaufel (3) zu glätten.

6. Oberflächenbearbeitungsfahrzeug nach Anspruch 5, wobei der Glättungswerkzeugkopf (17) mindestens eine rotierende Walze (34) umfasst und die mindestens eine rotierende Walze (34) an ihrer Außenfläche (36) Wischelemente (35) zum Überstreichen der Oberfläche (20) der Schaufel (3) umfasst.

7. Oberflächenbearbeitungsfahrzeug nach Anspruch 5, wobei der Glättungswerkzeugkopf (17') mindestens eine rotierende Walze (34') zum Überrollen der Oberfläche (20) der Schaufel (3) umfasst und die mindestens eine rotierende Walze (34') an ihrer Außenfläche (36') ein flexibles Material (37) umfasst.

8. Oberflächenbearbeitungsfahrzeug nach einem der Ansprüche 1 bis 7, umfassend eine Schleifeinheit (38) zum Schleifen der Oberfläche (20) der Schaufel (3) und/oder eine Reinigungseinheit (43) zum Reinigen der Oberfläche (20) der Schaufel (3).

9. Oberflächenbearbeitungsfahrzeug nach einem der Ansprüche 1 bis 8, umfassend eine Steuereinheit (46) zur Steuerung von:
der Fortbewegung des Oberflächenbearbeitungsfahrzeugs,
der Fülleinheit (21), einer Sensoreinheit (32), der Glättungseinheit (33, 33'), einer Schleifeinheit (38) und/oder einer Reinigungseinheit (43), und/oder
der Bewegung des Abgabekopfes (15), des Glättungswerkzeugkopfes (17, 17'), eines Werkzeugkopfes (39) der Schleifeinheit (38) und/oder eines Werkzeugkopfes (44) der Reinigungseinheit (43) relativ zur Transporteinheit (9).

10. Oberflächenbearbeitungsfahrzeug nach Anspruch 9, wobei die Steuereinheit (46) dazu ausgelegt ist, die Steuerung automatisch und/oder vollautomatisch durchzuführen.

11. Oberflächenbearbeitungsfahrzeug nach Anspruch 9 oder 10, wobei die Steuereinheit (46) dazu ausgelegt ist, die Fortbewegung des Oberflächenbearbeitungsfahrzeugs und/oder die Bewegung des Abgabekopfes (15), des Glättungswerkzeugkopfes (17, 17'), des Werkzeugkopfes (39) der Schleifeinheit (38) und/oder des Werkzeugkopfes (44) der Reinigungseinheit (43) basierend auf einer Oberflächenbearbeitungsgeschwindigkeit der Fülleinheit (21), der Sensoreinheit (32), der Glättungseinheit (33, 33'), der Schleifeinheit (38) und/oder der Reinigungseinheit (43) zu steuern.

12. Oberflächenbearbeitungsfahrzeug nach Anspruch 4 und einem der Ansprüche 9 bis 11, wobei die Steuereinheit (46) dazu ausgelegt ist, die Sensordaten aus der Sensoreinheit (32) zu erfassen, Oberflächendefekte (31) auf der Oberfläche (20) der Schaufel (3) basierend auf den Sensordaten zu identifizieren und die Fülleinheit (21) so zu steuern, dass die Fülleinheit (21) das Füllmaterial (19) an den erkannten Oberflächendefekten (31) aufträgt.

13. Verfahren zur Herstellung einer Windturbinenschaufel (3) mittels eines Oberflächenbearbeitungsfahrzeugs (8), wobei das Fahrzeug eine Transporteinheit (9) zur Fortbewegung des Fahrzeugs auf einem Boden einer Fertigungshalle, eine Fülleinheit (21) zum Auftragen eines Füllmaterials (19) auf eine Oberfläche (20) der Schaufel (3) und eine Glättungseinheit (33) mit einem Glättungswerkzeugkopf (17, 17') zum Ausfüllen von Oberflächendefekten (31) der Schaufel (3) mit dem aufgetragenen Füllmaterial (19) umfasst, wobei das Verfahren die folgenden Schritte umfasst:
a) Bewegen (S1) des Fahrzeugs (8) relativ zur Schaufel (3) durch Bewegen einer Transporteinheit (9) des Fahrzeugs (8),
b) Bewegen (S2) eines Abgabekopfes (15) der Fülleinheit (21) relativ zur Transporteinheit (9) des Fahrzeugs (8),
c) Zuführen (S7) des Füllmaterials (19') aus einem an der Transporteinheit (9) befestigten Tank (22) zum Abgabekopf (15),
d) Auftragen (S8) des Füllmaterials (19) auf die Oberfläche (20) der Schaufel (3),
e) Bewegen des Glättungswerkzeugkopfes (17, 17') relativ zur Transporteinheit (9), und
f) Ausfüllen von Oberflächendefekten (31) der Schaufel (3) mit dem aufgetragenen Füllmaterial (19) mittels des Glättungswerkzeugkopfes (17, 17').

14. Verfahren nach Anspruch 13, umfassend die Schritte:
Identifizieren (S5, S6) von Oberflächendefekten (31) auf der Oberfläche (20) der Schaufel (3) mittels einer Sensoreinheit (32) des Fahrzeugs (8),
Auftragen (S8) des Füllmaterials (19) an den identifizierten Oberflächendefekten (31) auf der Schaufel (3) mittels der Fülleinheit (21) des Fahrzeugs (8).

15. Verfahren nach Anspruch 13 oder 14, umfassend die Schritte:
Schleifen (S3) der Oberfläche (20) der Schaufel (3) mittels einer Schleifeinheit (38) des Fahrzeugs (8) und/oder
Reinigen (S4) der Oberfläche (20) der Schaufel (3) mittels einer Reinigungseinheit (43) des Fahrzeugs (8).

## Revendications

1. Véhicule de traitement de surface (8) pour la fabrication d'une pale d'éolienne (3), le véhicule comprenant :
une unité de transport (9) pour la locomotion du véhicule sur le sol d'un atelier de fabrication,
une unité de remplissage (21) pour appliquer un matériau de remplissage (19) sur une surface (20) de la pale, et
une unité de lissage (33) pour remplir les défauts de surface (31) de la pale (3) avec le matériau de remplissage appliqué (19),
dans lequel l'unité de remplissage (21) comprend :
une tête de distribution (15) pour distribuer le matériau de remplissage (19), la tête de distribution (15) étant fixée de manière mobile à l'unité de transport (9), et
un réservoir (22) pour stocker le matériau de remplissage (19'), le réservoir (22) étant fixé à l'unité de transport (9) et en communication fluidique avec la tête de distribution (15), et
dans lequel l'unité de lissage (33) comprend une tête d'outil de lissage (17, 17') fixée de manière mobile à l'unité de transport (9).

2. Véhicule de traitement de surface selon la revendication 1, dans lequel l'unité de remplissage (21) est configurée pour mélanger un matériau de remplissage à deux composants (19') et appliquer le matériau de remplissage à deux composants mélangé (19) sur la surface (20) de la pale (3).

3. Véhicule de traitement de surface selon la revendication 2, dans lequel la tête de distribution (15) comprend une unité de mélange (29) pour mélanger le matériau de remplissage à deux composants (19'), et le réservoir (22) comprend au moins deux chambres séparées (27, 28) pour les au moins deux composants (25, 26) du matériau de remplissage à deux composants (19'), chaque chambre (27, 28) étant en communication fluidique avec l'unité de mélange (29) de la tête de distribution (15).

4. Véhicule de traitement de surface selon l'une des revendications 1 à 3, comprenant une unité de capteur (32) pour obtenir des données de capteur de la surface (20) de la pale (3).

5. Véhicule de traitement de surface selon l'une des revendications 1 à 4, dans lequel l'unité de lissage (33) est configurée pour lisser la surface (20) de la pale (3).

6. Véhicule de traitement de surface selon la revendication 5, dans lequel la tête d'outil de lissage (17) comprend au moins un tambour rotatif (34), et l'au moins un tambour rotatif (34) comprend des éléments d'essuyage (35) sur sa surface extérieure (36) pour essuyer la surface (20) de la pale (3).

7. Véhicule de traitement de surface selon la revendication 5, dans lequel la tête d'outil de lissage (17') comprend au moins un tambour rotatif (34') pour rouler sur la surface (20) de la pale (3), et l'au moins un tambour rotatif (34') comprend un matériau flexible (37) sur sa surface extérieure (36').

8. Véhicule de traitement de surface selon l'une des revendications 1 à 7, comprenant une unité de meulage (38) pour meuler la surface (20) de la pale (3) et/ou une unité de nettoyage (43) pour nettoyer la surface (20) de la pale (3).

9. Véhicule de traitement de surface selon l'une des revendications 1 à 8, comprenant une unité de commande (46) pour commander :
la locomotion du véhicule de traitement de surface,
l'unité de remplissage (21), une unité de capteur (32), l'unité de lissage (33, 33'), une unité de meulage (38) et/ou une unité de nettoyage (43), et/ou
le déplacement, par rapport à l'unité de transport (9), de la tête de distribution (15), de la tête d'outil de lissage (17, 17'), d'une tête d'outil (39) de l'unité de meulage (38) et/ou d'une tête d'outil (44) de l'unité de nettoyage (43).

10. Véhicule de traitement de surface selon la revendication 9, dans lequel l'unité de commande (46) est configurée pour effectuer ladite commande de manière automatique et/ou entièrement automatique.

11. Véhicule de traitement de surface selon la revendication 9 ou 10, dans lequel l'unité de commande (46) est configurée pour commander la locomotion du véhicule de traitement de surface et/ou le déplacement de la tête de distribution (15), de la tête d'outil de lissage (17, 17'), de la tête d'outil (39) de l'unité de meulage (38) et/ou de la tête d'outil (44) de l'unité de nettoyage (43) sur la base de la vitesse de traitement de surface de l'unité de remplissage (21), de l'unité de capteur (32), de l'unité de lissage (33, 33'), de l'unité de meulage (38) et/ou de l'unité de nettoyage (43).

12. Véhicule de traitement de surface selon la revendication 4 et l'une des revendications 9 à 11, dans lequel l'unité de commande (46) est configurée pour obtenir les données du capteur de l'unité de capteur (32), identifier les défauts de surface (31) sur la surface (20) de la pale (3) sur la base des données de capteur et commander l'unité de remplissage (21) de sorte que l'unité de remplissage (21) applique le matériau de remplissage (19) au niveau des défauts de surface identifiés (31).

13. Procédé de fabrication d'une pale d'éolienne (3) au moyen d'un véhicule de traitement de surface (8), le véhicule comprenant une unité de transport (9) pour la locomotion du véhicule sur le sol d'un atelier de fabrication, une unité de remplissage (21) pour l'application d'un matériau de remplissage (19) sur la surface (20) de la pale (3), et une unité de lissage (33) avec une tête d'outil de lissage (17, 17') pour le remplissage des défauts de surface (31) de la pale (3) avec le matériau de remplissage appliqué (19), le procédé comprend les étapes de :
a) déplacement (S1) du véhicule (8) par rapport à la pale (3) par le déplacement d'une unité de transport (9) du véhicule (8),
b) déplacement (S2) d'une tête de distribution (15) de l'unité de remplissage (21) par rapport à l'unité de transport (9) du véhicule (8),
c) fourniture (S7) du matériau de remplissage (19') à partir d'un réservoir (22) fixé à l'unité de transport (9) à la tête de distribution (15),
d) application (S8) du matériau de remplissage (19) sur la surface (20) de la pale (3),
e) déplacement de la tête d'outil de lissage (17, 17') par rapport à l'unité de transport (9), et
f) remplissage des défauts de surface (31) de la pale (3) avec le matériau de remplissage appliqué (19) au moyen de la tête d'outil de lissage (17, 17').

14. Procédé selon la revendication 13, comprenant les étapes de :
identification (S5, S6) des défauts de surface (31) sur la surface (20) de la pale (3) au moyen d'une unité de capteur (32) du véhicule (8),
application (S8) du matériau de remplissage (19) au niveau des défauts de surface identifiés (31) sur la pale (3) au moyen de l'unité de remplissage (21) du véhicule (8).

15. Procédé selon la revendication 13 ou 14, comprenant les étapes de :
meulage (S3) de la surface (20) de la pale (3) au moyen d'une unité de meulage (38) du véhicule (8), et/ou
nettoyage (S4) de la surface (20) de la pale (3) au moyen d'une unité de nettoyage (43) du véhicule (8).
